(19) Europäisches Patentamt

European Patent Office

Office européen des brevets

(11) **EP 3 581 318 A1**

(12) **EUROPEAN PATENT APPLICATION**

(43) Date of publication:
**18.12.2019 Bulletin 2019/51**

(51) Int Cl.:
***B23K 20/12*** *(2006.01)*      ***G06F 17/50*** *(2006.01)*

(21) Application number: **18177706.1**

(22) Date of filing: **14.06.2018**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (71) Applicant: **Siemens Aktiengesellschaft 80333 München (DE)**<br><br>(72) Inventor: **NAIR, Sudev 560078 Bangalore (IN)**<br><br>(74) Representative: **Patentanwaltskanzlei WILHELM & BECK Prinzenstraße 13 80639 München (DE)** |

(54) **SYSTEM, METHOD AND CONTROL UNIT FOR FRICTION STIR WELDING APPARATUS**

(57)     System, method and control unit for controlling a Friction Stir Welding (FSW) operation is disclosed. The method includes generating a FSW model of the FSW operation based on work-piece parameters, fixture parameters, ambient conditions, FSW apparatus use profile and FSW apparatus parameters associated with the FSW operation. The FSW operation parameters are predicted based on the FSW model, wherein the FSW operation parameters include weld profile, stresses, thermal gradient, load generated in work-pieces and the FSW apparatus. The FSW operation is controlled based on the predicted FSW operation by modifying at least one parameter from one of the FSW apparatus parameters, the work-piece parameters, the fixture parameters and the ambient conditions.

**EP 3 581 318 A1**

## Description

Friction stir welding (FSW) apparatus is used joining work-pieces of materials such as metals. The FSW apparatus has a shoulder tool and pin tool extending towards the work-pieces. During the operation of the FSW apparatus, the pin tool is brought in contact with the material of both the work-pieces. The rotational movement of the pin tool in the materials produces a large amount of frictional heating the joint between the work-pieces. This heat softens the material of the work-pieces in the vicinity of the pin tool and results in mingling of material from the two work-pieces to form a weld.

Currently, operating parameters of the FSW apparatus such as feed force, forging force and other geometrical parameters like tool shape) are parameterized based on prior knowledge and trial error methods. Therefore, the parameterization requires experts with domain knowledge and is time consuming. For example, a new combination of materials for welding require various levels of experimentation, which is time consuming. Further, residual stress measurement (RS) requires experimentation and evaluation by neutron diffraction or X-ray diffraction method (XRD, which is not only time consuming but expensive.

Method, system, and computer program product for simulating friction stir welding is disclosed in US 9387551 B2. The method discloses simulation of movement of parts and fixture of the FSW appatatus that may occur during welding. While the method discloses simulation without actually completing the welding, the method is limited to fixture modelling and relies on experts for setting parameters of the FSW apparatus.

Friction Stir Welding device and method for controlling FSW is disclosed in WO 2017022537 A1. Control device disclosed in the publication relates to control of the rotation speed and/or the movement speed of the FSW apparatus when welding is performed. The control device is capable of managing the FSW apparatus such that temperature of weld detected by temperature sensors fall within a predetermined temperature range. While the publication covers the aspect of a sensor based data driven approach of controlling the FSW apparatus, reliance on data driven analysis does not accurately predict temperature rise and residual stress.

The above mentioned methods and control devices rely mainly on data driven analysis. However, the reliance of the experts is required to ensure accuracy of the simulation. Therefore, it is an object of the present invention to provide a control device for a FSW apparatus capable of accurately determining the operating parameters suitable for a welding operation and predicting residual stress for the FSW apparatus.

The invention achieves this object by controlling the FSW operation based on the predicted FSW operation by modifying one or more parameters from one of the FSW apparatus parameters, the work-piece parameters, the fixture parameters and the ambient conditions.

A Friction Stir Welding (FSW) apparatus of the present invention includes a pin tool, a pin drive mechanism, a shoulder tool 108 and a control unit. The pin tool of the FSW apparatus has a length with a penetration end and a shoulder end. As used herein, "penetration end" relates to an end of the pin tool that is in contact with the work-pieces that are to be welded. The term "weld region" refers to a joint between the work-pieces where the pin tool is plunged to create the weld. After the welding action is performed the weld region is referred to as the welded region or Weld nugget and Thermal Mechanical Affected Zone (TMAZ). The pin tool also includes a penetration axis extending through a length of pin tool. As used herein the "penetration axis" is an imaginary line that indicates the path of the pin tool as it plunges into the work-pieces. The control unit is capable of controlling the operation of the pin tool, shoulder tool in terms of the plunge force required, weld profile etc. The control unit operation is further elaborated in the following figures in the detailed description.

According to a first aspect of the present invention, a method of controlling a FSW operation is disclosed. The method includes generates a FSW model of the FSW operation based on work-piece parameters, fixture parameters, ambient conditions, etc. In an embodiment, the FSW model is generated from stored FSW model created for the FSW apparatus during designing of the FSW apparatus. In another embodiment, the FSW model is generated from iterative FSW model updated with the use profile of the FSW apparatus and the FSW apparatus parameters. The FSW model of the FSW apparatus is generated and validated based on the sensor data from the sensors on the FSW apparatus. Accordingly, the FSW model is a high-fidelity digitial twin or virtual replica of the FSW apparatus and is advantageous as it reflects the real-time condition of the FSW apparatus. The term "digital twin" is refers to as a multiphysics, multiscale, probabilistic simulation of the FSW apparatus that uses the physical based models, sensor data, fleet history, etc., to act like a virtual twin the FSW apparatus.

In an embodiment, the FSW model includes a simulated shoulder tool, a simulated pin tool, simulated work-pieces 824 and simulated joint. The operation parameters are also simulated, such as plunge force, pin tool rotation, slide force, clamping force, etc. The conditions of the work-piece in terms of temperature gradient and residual stess is also simulated. The temperature gradient is indicated visually through a heat map indicating low temperature region, medium temperature region and high temperature region. The thermal gradient is also simulated for stages in the FSW operation. For example, at pre-plunge to plunge stage the temperature increase from 30° Celcius to 150° Celcius. At shoulder contact stage the temperature increases from 150° Celcius to 290° Celcius. Further, in traverse stage the temperature remains around 290-310° Celcius.

The residual stress is evaluated by means of a viscoplastic model. The work-piece behavior is simulated to determine strain rate, temperature, history of strain rate and temperature, and strain hardening and softening. The viscoplastic model introduces a scalar quantity called the deformation resistance (s), which is used to represent the isotropic resistance to inelastic flow of the material.

The FSW model is used to predict FSW operation parameters. The FSW operation parameters include weld profile, stresses, thermal gradient, load generated in work-pieces and the FSW apparatus. In an embodiment, the prediction is performed by employing probabilistic approaches such as Bayesian and maximum likelihood. By basing the prediction of FSW operating paramters on the FSW model, the physics based boundary conditions are considered along with sensor data.

The experimental results associated with the operation of the FSW apparatus is obtained. The experimental results are obtained by non-destructive analysis such as X-ray diffraction and thermal imaging. Further, the FSW model is adjusted with the experimental results to reflect condition of the FSW operation in real-time. This step is advantageous as the digitial twin or the FSW model of the FSW apparatus is constantly updated for accurate prediction of FSW operational parameters.

In an embodiment, a load cell is provided beneath the work-pieces and a displacement sensor. The load cell determines the load on the work-pieces at plunge stage and the traverse stage. The displacement sensor tracks time dependent displacement of FSW slide. The experimental results for thermal gradient and residual stress are obtained through sensing means such as thermocouple, thermal imaging device and X-Ray diffration. A person skilled in the art will appreciate that the experimental results from the sensing means is stored and analzed by the control unit.

The FSW model is validated by comparing the predicted FSW operation parameters and the experimental results. The validation is performed for multiple test cases with varing work-pieces and load profile. Parameters that require modification in the FSW operation are displayed on a display panel of the control unit associated with the operation of the FSW apparatus. The control unit controls the FSW operation based on the validated FSW model by modifying one or more parameters that impact the FSW operation. The one or more parameters include the FSW apparatus parameters, the work-piece parameters, the fixture parameters and the ambient conditions.

For example, the control unit predicts quality of welded work-pieces by predicting the residual stress and probability of fatigue/crack propagation. Based on the prediction, the pluge force and the clamping force of the work-pieces are modified.

The steps of FSW model generation, FSW model updation, model validation and testing can be performed in real-time with controlling the FSW model by generating a meta FSW model. The meta FSW model is a reduced order model of the FSW model, which is a simplification of the high-fidelity digital twin. The meta FSW model preserves essential behaviour and dominant effects for the purpose of reducing solution time or storage capacity required for the more complex model. To ensure the steps are executed in real-time, select parameters that impact the FSW are predicted. For example, a residual stress and a thermal gradient in workpieces and plunge tool are predicted.

In an embodiment of the present invention, existing fixture and tool design is provided to the control unit. The design is provided in terms of clamping force, fixture parameters, tool goemetry and tool parameters. The control unit generates a FSW model based on the fixture and tool design. In addition the FSW model includes simulation of ambient conditions, work-piece parameters, etc.

The experimental results from the operation of the FSW apparatus is recieved. The experimental results includes experimental thermal data and experimental stress data. The experimental results are updated in the FSW model at step. Further, the FSW model is validated with the experimental results by comparing operation parameters predicted from the FSW model and the experimental results. The modification in the fixture and tool design are displayed on the display panel of the control unit. The parameters that require modification are compared with the existing fixture and tool design. Further, 3-Dimensional CAD (Computer Aided Drawings) are automatically updated to reflect the modifications in fixture and tool design. The modified fixture and tool design is implemented by modifying one or more fixture angle and positioning, tool goemetry, clamping force and tool shape and positioning.

According to another aspect of the present invention, a control unit for controlling the FSW operation is provided. The control unit is communicatively coupled with the FSW apparatus by a network interface. Alternatively, the control unit is provided on the FSW apparatus as a panel processing unit.

The FSW apparatus includes multiple sensors that measure parameters associated with the FSW operation. As indicated above, the FSW apparatus includes the panel processing unit that includes a trans-receiver capable of connecting to the network interface. In an embodiment, the panel processing unit receives sensor data from the sensors and transmits the sensor data to the control unit via the network interface. In another embodiment, the panel processing unit performs the functions of the control unit. Accordingly, the below description of the control unit applies to the panel processing unit.

The control unit includes a communication unit, at least one processor, a display, a Graphical User Interface (GUI) and a memory communicatively coupled to each other. The communication unit includes a transmitter, a receiver and Gigabit Ethernet port. The memory is provided with modules stored in the form of computer readable instructions. The processor is configured to execute the defined computer program instructions in the modules. Further, the processor is configured to execute the instructions in the memory simultaneously. The display includes a High-Definition Multimedia Interface (HDMI) display.

In an embodiment, the control unit is configured on a cloud computing based platform or a distributed computing platform implemented as a service for analyzing data. Additionally, control personnel can access the control unit via the GUI.

The processor executes a model generation module, a prediction module and a validation module. The model generation module further includes a meta FSW model generator. The prediction module further includes stress prediction module and thermal prediction module. Also, the validation module further includes a stress validation module and a thermal validation module. The processor performs the above method by executing the above mentioned modules.

According to a yet another aspect of the present invention, a system for controlling a plurality of FSW operations is provided. The system includes a server, a network interface communicatively coupled to the server. In an embodiment, the system includes sensors associated with FSW apparatus communicatively coupled to the server via the network interface. The system also includes one or more control units provided with each FSW apparatus. The control units 500 are communicatively coupled to the server.

The server includes a communication unit, a processing unit and a memory. The memory is configured to store computer program instructions defined by modules, for example, model training module. In an embodiment, server can also be implemented on a cloud computing environment, where computing resources are delivered as a service over the network.

The processing unit of the server executes the model training module and model tuning module. The model training module trains FSW models of FSW apparatuses performing the plurality of FSW operations.

The model training module includes a neural network that automatically learns the operating parameters of the FSW apparatus based on data received from the sensor. For example, the model training module generates FSW models for the FSW apparatus based on FSW apparatus use profile and design drawings of the FSW apparatus. In another example, the FSW models are generated based on cumulative data associated with the plurality of the FSW operations.

The model tuning module tunes a second FSW model associated with a second FSW apparatus based on a first FSW model associated with a first FSW apparatus. For example, the model tuning module receives the first FSW model of the FSW apparatus from the model training module. The model tuning module tunes the second FSW model for the FSW apparatus based on the comparison of design drawings and operating parameters of the FSW apparatus. In other words, the model tuning module considers the differences in design between FSW apparatus. Further, the model tuning module considers the differences in the operating parameters or condition of operation between the FSW apparatus.

The invention achieves this object by controlling the FSW operation based on the predicted FSW operation by modifying one or more parameters from one of the FSW apparatus parameters, the work-piece parameters, the fixture parameters and the ambient conditions.

A Friction Stir Welding (FSW) apparatus of the present invention includes a pin tool, a pin drive mechanism, a shoulder tool and a control unit. The pin tool of the FSW apparatus has a length with a penetration end and a shoulder end. As used herein, "penetration end" relates to an end of the pin tool that is in contact with the work-pieces that are to be welded. The term "weld region" refers to a joint between the work-pieces where the pin tool is plunged to create the weld. After the welding action is performed the weld region is referred to as the welded region or Weld nugget and Thermal Mechanical Affected Zone (TMAZ). The pin tool also includes a penetration axis extending through a length of pin tool. As used herein the "penetration axis" is an imaginary line that indicates the path of the pin tool as it plunges into the work-pieces. The control unit is capable of controlling the operation of the pin tool, shoulder tool in terms of the plunge force required, weld profile etc. The control unit operation is further elaborated in the following figures in the detailed description.

According to a first aspect of the present invention, a method of controlling a FSW operation is disclosed. The method includes generates a FSW model of the FSW operation based on work-piece parameters, fixture parameters, ambient conditions, etc. In an embodiment, the FSW model is generated from stored FSW model created for the FSW apparatus during designing of the FSW apparatus. In another embodiment, the FSW model is generated from iterative FSW model updated with the use profile of the FSW apparatus and the FSW apparatus parameters. The FSW model of the FSW apparatus is generated and validated based on the sensor data from the sensors on the FSW apparatus. Accordingly, the FSW model is a high-fidelity digitial twin or virtual replica of the FSW apparatus and is advantageous as it reflects the real-time condition of the FSW apparatus. The term "digital twin" is refers to as a multiphysics, multiscale, probabilistic simulation of the FSW apparatus that uses the physical based models, sensor data, fleet history, etc., to act like a virtual twin the FSW apparatus.

In an embodiment, the FSW model includes a simulated shoulder tool, a simulated pin tool, simulated work-pieces and simulated joint. The operation parameters are also simulated, such as plunge force, pin tool rotation, slide force, clamping force, etc. The conditions of the work-piece in terms of temperature gradient and residual stess is also simulated. The temperature gradient is indicated visually through a heat map indicating low temperature region, medium temperature region and high temperature region. The thermal gradient is also simulated for stages in the FSW operation. For example, at pre-plunge to plunge stage the temperature increase from 30° Celcius to 150° Celcius. At shoulder contact stage the temperature increases from 150° Celcius to 290° Celcius. Further, in traverse stage the temperature remains around 290-310° Celcius.

The residual stress is evaluated by means of a viscoplastic model. The work-piece behavior is simulated to determine strain rate, temperature, history of strain rate and temperature, and strain hardening and softening. The viscoplastic model introduces a scalar quantity called the deformation resistance (s), which is used to represent the isotropic resistance to inelastic flow of the material.

The FSW model is used to predict FSW operation parameters. The FSW operation parameters include weld profile, stresses, thermal gradient, load generated in work-pieces and the FSW apparatus. In an embodiment, the prediction is performed by employing probabilistic approaches such as Bayesian and maximum likelihood. By basing the prediction of FSW operating paramters on the FSW model, the physics based boundary conditions are considered along with sensor data.

The experimental results associated with the operation of the FSW apparatus is obtained. The experimental results are obtained by non-destructive analysis such as X-ray diffraction and thermal imaging. Further, the FSW model is adjusted with the experimental results to reflect condition of the FSW operation in real-time. This step is advantageous as the digitial twin or the FSW model of the FSW apparatus is constantly updated for accurate prediction of FSW operational parameters.

In an embodiment, a load cell is provided beneath the work-pieces and a displacement sensor. The load cell determines the load on the work-pieces at plunge stage and the traverse stage. The displacement sensor tracks time dependent displacement of FSW slide. The experimental results for thermal gradient and residual stress are obtained through sensing means such as thermocouple, thermal imaging device and X-Ray diffration. A person skilled in the art will appreciate that the experimental results from the sensing means is stored and analzed by the control unit.

The FSW model is validated by comparing the predicted FSW operation parameters and the experimental results. The validation is performed for multiple test cases with varing work-pieces and load profile. Parameters that require modification in the FSW operation are displayed on a display panel of the control unit associated with the operation of the FSW apparatus. The control unit controls the FSW operation based on the validated FSW model by modifying one or more parameters that impact the FSW operation. The one or more parameters include the FSW apparatus parameters, the work-piece parameters, the fixture parameters and the ambient conditions.

For example, the control unit predicts quality of welded work-pieces by predicting the residual stress and probability of fatigue/crack propagation. Based on the prediction, the pluge force and the clamping force of the work-pieces are modified. The steps of FSW model generation, FSW model updation, model validation and testing can be performed in real-time with controlling the FSW model by generating a meta FSW model. The meta FSW model is a reduced order model of the FSW model, which is a simplification of the high-fidelity digital twin. The meta FSW model preserves essential behaviour and dominant effects for the purpose of reducing solution time or storage capacity required for the more complex model. To ensure the steps are executed in real-time, select parameters that impact the FSW are predicted. For example, a residual stress and a thermal gradient in workpieces and plunge tool are predicted.

In an embodiment of the present invention, existing fixture and tool design is provided to the control unit. The design is provided in terms of clamping force, fixture parameters, tool goemetry and tool parameters. The control unit generates a FSW model based on the fixture and tool design. In addition the FSW model includes simulation of ambient conditions, work-piece parameters, etc.

The experimental results from the operation of the FSW apparatus is recieved. The experimental results includes experimental thermal data and experimental stress data. The experimental results are updated in the FSW model at step. Further, the FSW model is validated with the experimental results by comparing operation parameters predicted from the FSW model and the experimental results. The modification in the fixture and tool design are displayed on the display panel of the control unit. The parameters that require modification are compared with the existing fixture and tool design. Further, 3-Dimensional CAD (Computer Aided Drawings) are automatically updated to reflect the modifications in fixture and tool design. The modified fixture and tool design is implemented by modifying one or more fixture angle and positioning, tool goemetry, clamping force and tool shape and positioning.

According to another aspect of the present invention, a control unit for controlling the FSW operation is provided. The control unit is communicatively coupled with the FSW apparatus by a network interface. Alternatively, the control unit is provided on the FSW apparatus as a panel processing unit.

The FSW apparatus includes multiple sensors that measure parameters associated with the FSW operation. As indicated above, the FSW apparatus includes the panel processing unit that includes a trans-receiver capable of connecting to the network interface. In an embodiment, the panel processing unit receives sensor data from the sensors and transmits the sensor data to the control unit via the network interface. In another embodiment, the panel processing unit performs the functions of the control unit. Accordingly, the below description of the control unit applies to the panel processing unit.

The control unit includes a communication unit, at least one processor, a display, a Graphical User Interface (GUI) and a memory communicatively coupled to each other. The communication unit includes a transmitter, a receiver and Gigabit Ethernet port. The memory is provided with modules stored in the form of computer readable instructions. The processor is configured to execute the defined computer program instructions in the modules. Further, the processor is configured to execute the instructions in the memory simultaneously. The display includes a High-Definition Multimedia Interface (HDMI) display.

In an embodiment, the control unit is configured on a cloud computing based platform or a distributed computing platform implemented as a service for analyzing data. Additionally, control personnel can access the control unit via the GUI.

The processor executes a model generation module, a prediction module and a validation module. The model generation module further includes a meta FSW model generator. The prediction module further includes stress prediction module and thermal prediction module. Also, the validation module further includes a stress validation module and a thermal validation module. The processor performs the above method by executing the above mentioned modules.

According to a yet another aspect of the present invention, a system for controlling a plurality of FSW operations is provided. The system includes a server, a network interface communicatively coupled to the server. In an embodiment, the system includes sensors associated with FSW apparatus communicatively coupled to the server via the network interface. The system also includes one or more control units provided with each FSW apparatus. The control units are communicatively coupled to the server.

The server includes a communication unit, a processing unit and a memory. The memory is configured to store computer program instructions defined by modules, for example, model training module. In an embodiment, server can also be implemented on a cloud computing environment, where computing resources are delivered as a service over the network.

The processing unit of the server executes the model training module and model tuning module. The model training module trains FSW models of FSW apparatuses performing the plurality of FSW operations.

The model training module includes a neural network that automatically learns the operating parameters of the FSW apparatus based on data received from the sensor. For example, the model training module generates FSW models for the FSW apparatus based on FSW apparatus use profile and design drawings of the FSW apparatus. In another example, the FSW models are generated based on cumulative data associated with the plurality of the FSW operations.

The model tuning module tunes a second FSW model associated with a second FSW apparatus based on a first FSW model associated with a first FSW apparatus. For example, the model tuning module receives the first FSW model of the FSW apparatus from the model training module. The model tuning module tunes the second FSW model for the FSW apparatus based on the comparison of design drawings and operating parameters of the FSW apparatus. In other words, the model tuning module considers the differences in design between FSW apparatus. Further, the model tuning module considers the differences in the operating parameters or condition of operation between the FSW apparatus.

Various embodiments are described with reference to the drawings, wherein like reference numerals are used to refer to like elements throughout. In the following description, Friction Stir Welding is referred to as FSW as a short form. Further, numerous specific details are set forth in order to provide thorough understanding of one or more embodiments of the present invention. These examples must not be considered to limit the application of the invention to large gas turbine and includes any technical system that is capable of overcoming limitation of the sensors. It may be evident that such embodiments may be practiced without these specific details.

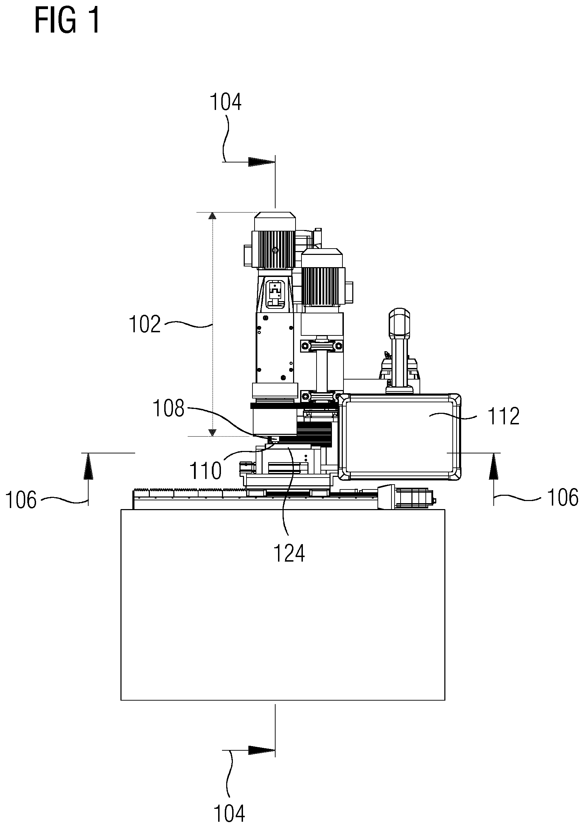

FIG 1 is a schematic representation of a Friction Stir Welding (FSW) apparatus (100) in accordance with the present invention. The FSW apparatus 100 comprising a pin tool 110, a pin drive mechanism 102, a shoulder tool 108 and a control unit 112. The pin tool 110 of the FSW apparatus 100 has a length with a penetration end and a shoulder end (not shown in FIG 1). The pin tool 110 also includes a penetration axis 104 extending through the length of pin tool 110. As used herein the "penetration axis" 104 is an imaginary line that indicates the path of the pin tool as it plunges into work-pieces 124.

The control unit 112 is capable of controlling the operation of the pin tool 110, shoulder tool 108 in terms of the plunge force required, weld profile etc. The control unit 112 operation is further elaborated in the following figures in the detailed description.

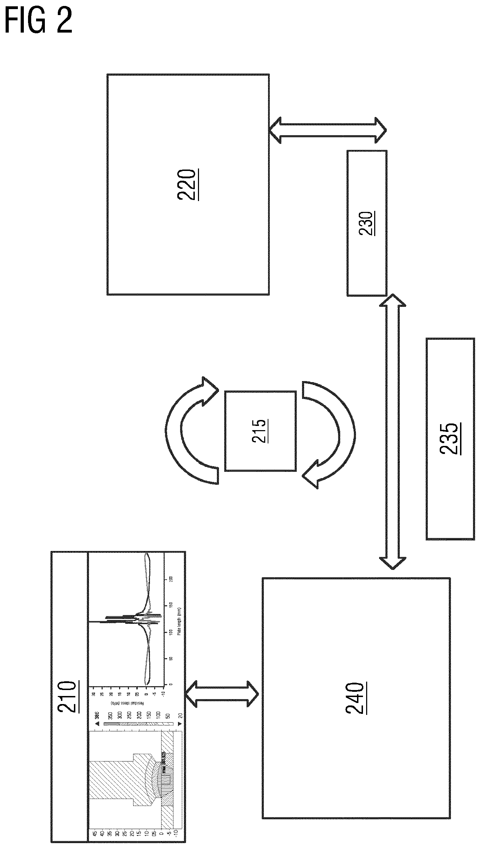

FIG 2 illustrates the steps of operation of the control unit 112 to control the FSW apparatus 100. At step 210, the control unit generates a FSW model of the FSW operation based on work-piece parameters, fixture parameters, ambient conditions, etc. In an embodiment, the FSW model is generated from stored FSW model created for the FSW apparatus 100 during designing of the FSW apparatus 100. In another embodiment, the FSW model is generated from iterative FSW model updated with the use profile of the FSW apparatus 100 and the FSW apparatus parameters.

Further, at step 210 the FSW model is used to predict FSW operation parameters. The FSW operation parameters include weld profile, stresses, thermal gradient, load generated in work-pieces and the FSW apparatus

At step 220, experimental results associated with the operation of the FSW apparatus 100 is obtained. The experimental results are obtained by non-destructive analysis such as X-ray diffraction and thermal imaging. At step 215, the FSW model is adjusted with the experimental results to reflect condition of the FSW operation in real-time. The predicted FSW operational parameters and the experimental results are compared to accurately capture the operational parameters that require adjusting.

It will be appreciated by a person skilled in the art that the steps 210, 215 and 220 can be executed independent of each other simulateously and not necessarily in the sequence as indicated.

At step 230, the FSW model is validated by comparing the predicted FSW operation parameters and the experimental results.

The validation is performed for multiple test cases with varing work-pieces and load profile at step 235.

At step 240, parameters that require modification in the FSW operation are displayed on a display panel of the control unit 112 associated with the operation of the FSW apparatus 100. The control unit controls the FSW operation based on the validated FSW model by modifying one or more parameters that impact the FSW operation. The one or more parameters include the FSW apparatus parameters, the work-piece parameters, the fixture parameters and the ambient conditions.

As indicated in FIG 2, the steps of FSW model generation 210, FSW model updation 215, model validation and testing 230 & 235 can be performed in real-time with step 220. To ensure the steps are executed in real-time, at step 210 select parameters that impact the FSW are predicted. For example, a residual stress and a thermal gradient in workpieces and plunge tool are predicted.

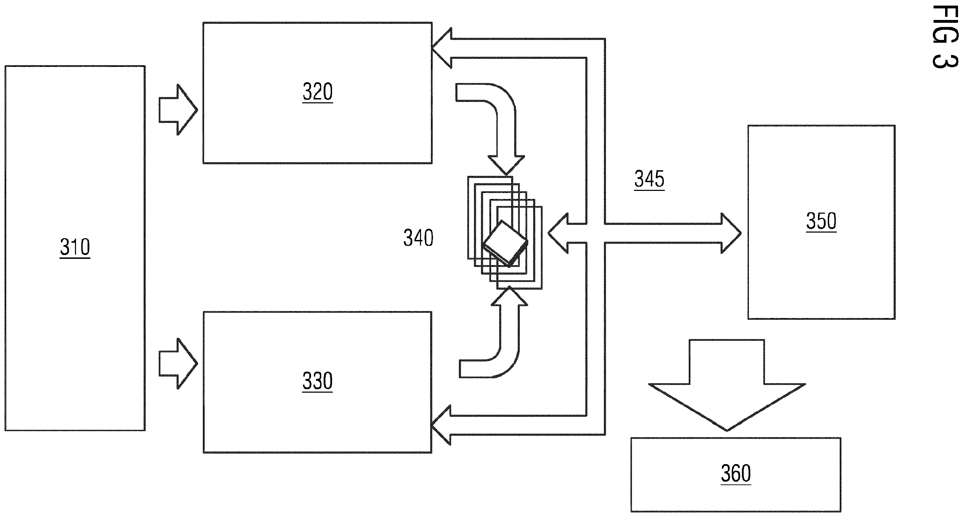

FIG 3 illustrates the steps of operation of the control unit 112 to control the FSW apparatus 100 for predicting residual stress for the welded work-pieces 124. At step 310, the control unit 112 receives the operation parameters including work-piece parameters, fixture parameters, ambient conditions, and FSW apparatus parameters. For example, the operation parameters include plunge depth, spindle speed, welding speed, pin and shoulder tool geometry, work-piece material, etc.

At step 320, the control unit 112 determines experimental thermal data from the operational parameters and from thermal imaging and thermocouple data. The experimental thermal data is compared with predicted thermal gradient generated a FSW model generated for the FSW apparatus 100. At step 330, the control unit 112 determines experimental stress data from the operational parameters and from X-ray diffraction. The experimental stress data is compared with predicted residual stress from the FSW model. The FSW model is a comprehensive simulation model that acts as a virtual replica or a digital twin of the FSW apparatus 100.

It will be appreciated by a person skilled in the art that the steps 320 and 330 can be done simultaneously or sequentially. In an embodiment, at step 320 thermal variation is determined by comparing the FSW model and experimental thermal data, which is in turn used to determine load variation in the FSW apparatus 100. In another embodiment, the thermal variation determined is used to validate the predicted residual stress.

At step 340, the validated FSW model is used to generate a meta FSW model to predict the stresses and the thermal gradient in real-time. The meta FSW model is a reduced order model of the FSW model. At step 345, the meta FSW model is used to determine the parameter to be modified and modifying the parameter. At step 350, the operation of the FSW apparatus 100 is monitored through sensors and provided as feedback to the FSW model and the meta FSW model for updating. Through this feedback, the FSW model and the meta FSW model reflect the real-time condition of the FSW apparatus and ist operation. At step 360, the control unit predicts quality of welded work-pieces by predicting the residual stress and probability of fatigue/crack propagation.

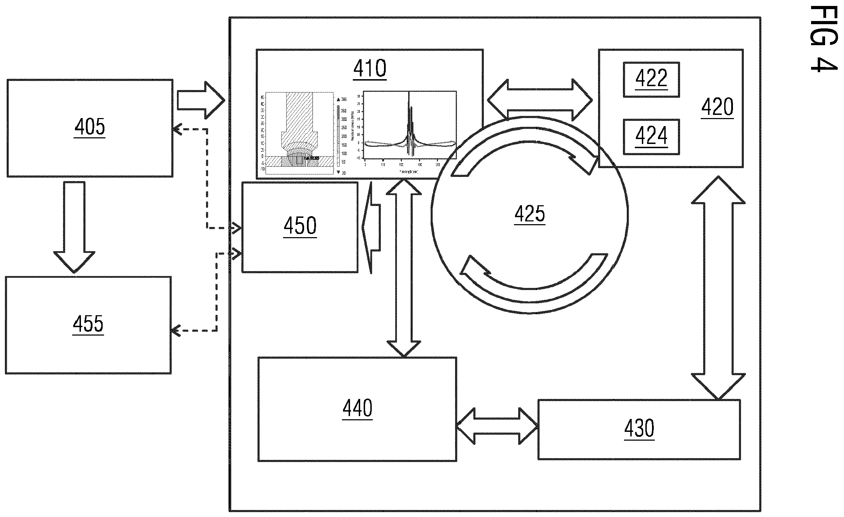

The control unit is capable of suggesting and modifying design features associated with the operation of the FSW apparatus 100. FIG 4 illustrates the steps performed by the control unit 112 to generate alternate fixture design for the FSW apparatus 100.

At step 405 existing fixture and tool design is provided to the control unit. The design is provided in terms of clamping force, fixture parameters, tool goemetry and tool parameters. The control unit at step 410 generates a FSW model based on the fixture and tool design. In addition the FSW model includes simulation of ambient conditions, work-piece parameters, etc.

At step 420, experimental results from the operation of the FSW apparatus is recieved. The experimental results includes experimental thermal data 422 and experimental stress data 424. The experimental results are updated in the FSW model at step 425. Further, at step 430 the FSW model is validated with the experimental results by comparing operation parameters predicted from the FSW model and the experimental results.

At step 440, parameters that require modification in the fixture and tool design are displayed on the display panel of the control unit. At step 450 the parameters that require modification are compared with the existing fixture and tool design. Further, 3-Dimensional CAD (Computer Aided Drawings) are automatically updated to reflect the modifications in fixture and tool design. At step 455, the modified fixture and tool design is implemented by modifying one or more fixture angle and positioning, tool goemetry, clamping force and tool shape and positioning.

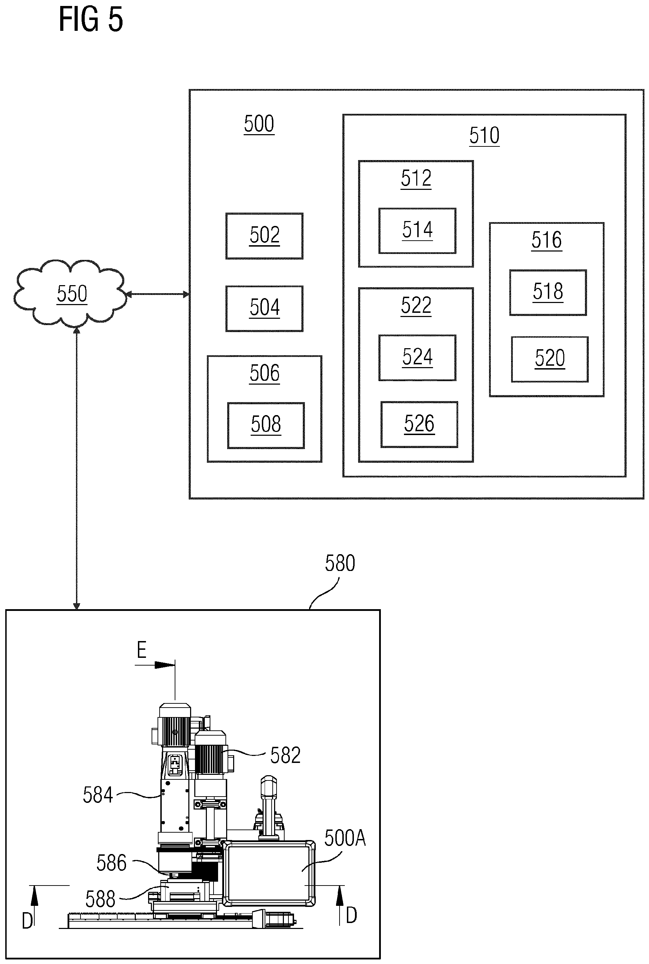

FIG 5 is a schematic diagram of the control unit to control the operation of the FSW apparatus in FIG 1. For the purpose of FIG 5, the control unit is numbered as 500 and the FSW apparatus is numbered as 580. As shown in the figure, the control unit 500 is communicatively coupled with the FSW apparatus 580 by a network interface 550. Alternatively, the control unit 500 is provided on the FSW apparatus as a panel processing unit 500a.

The FSW apparatus 580 includes multiple sensors 582, 584, 586 and 588 that measure parameters associated with the FSW operation. As indicated above, the FSW apparatus 580 includes the panel processing unit 500a that includes a trans-receiver 592 capable of connecting to the network interface 550. In an embodiment, the panel processing unit 500a receives sensor data from the sensors 582-588 and transmits the sensor data to the control unit 500 via the network interface 550. In another embodiment, the panel processing unit 500a performs the functions of the control unit 500. Accordingly, the below description of the control unit 500 applies to the panel processing unit 500a.

The control unit 500 includes a communication unit 502, at least one processor 504, a display 506, a Graphical User Interface (GUI) 508 and a memory 510 communicatively coupled to each other. The communication unit 502 includes a transmitter, a receiver and Gigabit Ethernet port. The memory 510 may include 2 Giga byte Random Access Memory (RAM) Package on Package (PoP) stacked and Flash Storage. The memory 510 is provided with modules stored in the form of computer readable instructions, for example, 512, 516 and 526. The processor 504 is configured to execute the defined computer program instructions in the modules. Further, the processor 504 is configured to execute the instructions in the memory 510 simultaneously. The display 506 includes a High-Definition Multimedia Interface (HDMI) display 506 and a cooling fan (not shown in the figure).

According to an embodiment of the present invention, the control unit 500 can be a personal computing device, a workstation, a client device, a network enabled computing device, any other suitable computing equipment, and combinations of multiple pieces of computing equipment. In an embodiment, the control unit 500 is configured on a cloud computing based platform implemented as a service for analyzing data. Additionally, control personnel can access the control unit 500 via the GUI 508. The GUI 508 is, for example, an online web interface, a web based downloadable application interface, etc.

The processor 504 executes a model generation module 512, a prediction module 516 and a validation module 522. The model generation module 512 further includes a meta FSW model generator 514. The prediction module 516 further includes stress prediction module 518 and thermal prediction module 520. Also, the validation module 522 further includes a stress validation module 524 and a thermal validation module 526.

When the model generation module 512 generate a FSW model of the FSW operation based on workpiece parameters, fixture parameters, ambient conditions, FSW apparatus use profile and FSW apparatus parameters associated with the FSW operation. Further, the meta FSW model generator 514 based on the FSW model to predict the stresses and the thermal gradient in real-time. The meta FSW model is a reduced order model of the FSW model. The meta FSW model generator 514 is particularly provided in the panel processing unit 500a such that decisions and modifications associated with the FSW apparatus 580 can be performed in real-time.

The prediction module 516 predicts FSW operation parameters based on the FSW model. In another embodiment, the prediction module 516 predicts the FSW operation parameters based on the metal FSW model. The prediction module 516 includes the stress prediction module 518 to predict a residual stress in workpieces to be welded based on a plurality of workpiece-plunge tool combinations, fixture boundary conditions and thermal boundary conditions using a time-dependent plasticity modeling. Further, the prediction module 516 includes the thermal prediction module 520 to predict a thermal gradient in the workpieces and plunge tool based on a plurality of workpiece-plunge tool combinations, fixture boundary conditions and thermal boundary conditions.

The validation module 522 validates the FSW model by comparing the predicted FSW operation parameters and experimental results from non-destructive analysis. The control unit is capable of controlling the FSW operation based on the validated FSW model by modifying parameter from one of the FSW apparatus parameters, the work-piece parameters, the fixture parameters and the ambient conditions.

The validation module 522 includes the stress validation module 524 that validates the predicted residual stress obtained from the stress prediction module 518. The predicted residual stress in the workpieces is validated based on the experimental results from a non-destructive analysis such as X-ray diffraction. The validation module 522 also includes the temperature validation module 536 that validates the predicted thermal gradient obtained from the thermal prediction module 520. The predicted thermal gradient is validated based on the experimental results from non-destructive analysis such as thermal imaging and thermocouple data.

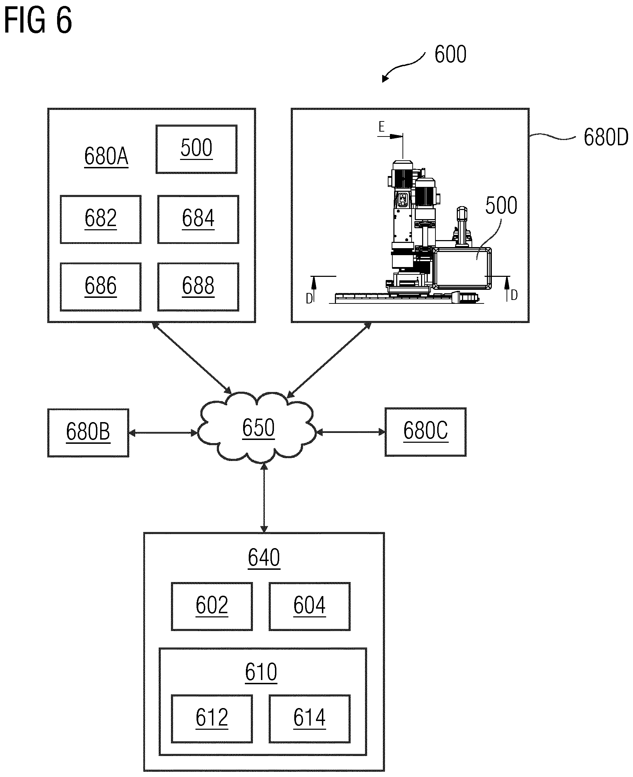

FIG 6 is a block diagram of a system for controlling a plurality of FSW operations. The system 600 includes a server 640, a network interface 650 communicatively coupled to the server. In an embodiment, the system 600 includes sensors 682, 684, 686 and 688 associated with FSW apparatus 680A-D communicatively coupled to the server 640 via the network interface 650. For the purpose of FIG 6, the FSW apparatus 680A-680D are collectively referred with the numeral 680, unless specific reference to a single FSW apparatus is made.

The system 600 also includes one or more control units 500 provided with each FSW apparatus 680. The control units 500 are communicatively coupled to the server 640. The operation of the control unit 500 has been elaborated in FIG 5.

The server 640 includes a communication unit 602, a processing unit 604 and a memory 610. The memory 610 is configured to store computer program instructions defined by modules, for example, model training module 612. In an embodiment, server 640 can also be implemented on a cloud computing environment, where computing resources are delivered as a service over the network 650.

As used herein, "cloud computing environment" refers to a processing environment comprising configurable computing physical and logical resources, for example, networks, servers, storage, applications, services, etc., and data distributed over the network 650, for example, the internet. The cloud computing environment provides on-demand network access to a shared pool of the configurable computing physical and logical resources. The network 650 is, for example, a wired network, a wireless network, a communication network, or a network formed from any combination of these networks.

The processing unit 604 of the server 640 executes the following modules: model training module 612 and model tuning module 614.

The model training module 612 trains FSW models of FSW apparatuses performing the plurality of FSW operations. For example, the model training module 612 generates FSW models for the FSW apparatus 680 based on FSW apparatus use profile and design drawings of the FSW apparatus 680. The model training module 612 includes a neural network that automatically learns the operating parameters of the FSW apparatus based on data received from the sensor 682-688.

The model tuning module 614 tunes a second FSW model associated with a second FSW apparatus based on a first FSW model associated with a first FSW apparatus. For example, the model tuning module 614 receives the first FSW model of the FSW apparatus 680A from the model training module 612. The model tuning module 614 tunes the second FSW model for the FSW apparatus 680B based on the comparison of design drawings and operating parameters of the FSW apparatus 680A and 680B. In other words, the model tuning module 614 considers the differences in design between FSW apparatus 680A and 680B. Further, the model tuning module 614 considers the differences in the operating parameters or condition of operation between the FSW apparatus 680A and 680B.

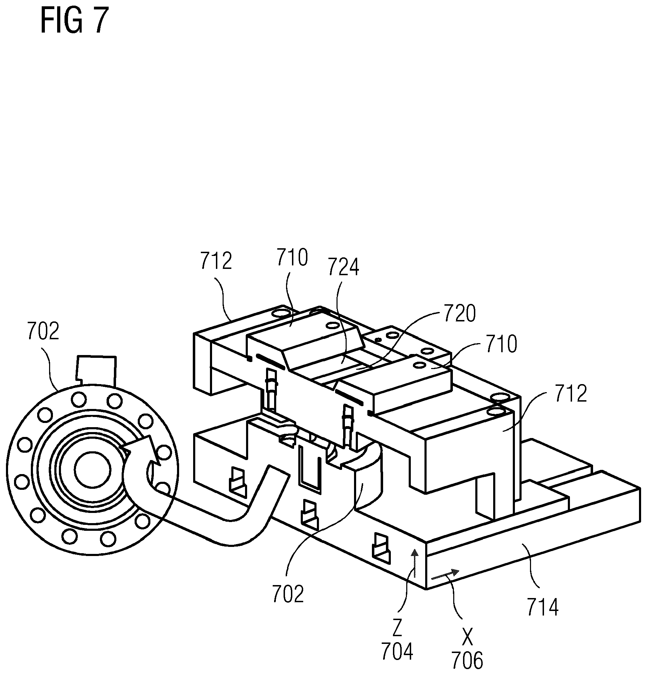

FIG 7 illustrates determination of load operating parameters of an FSW apparatus. FIG 7 indicates how experimental results associated with the load operating parameters are obtained from the FSW apparatus. As shown in FIG 7, fixture 710 is used to clamp work-pieces 724 together to generate a weld-able joint 720. The fixture 710 is provided on a fixture base 712. The fixture 710 and the fixture base 712 can be adjusted individually to ensure suitable clamping of the work-pieces 724.

Also shown in FIG 7, is a load cell 702 that is provided beneath the work-pieces 724 and the fixture 710. In an embodiment, the load cell 702 is a 20kN load cell. The FSW apparatus also includes a displacement sensor mounted on Z axis 704. The displacement sensor tracks time dependent displacement of FSW slide (not shown in FIG 7).

The experimental results for thermal gradient and residual stress are obtained through sensing means such as thermocouple, thermal imaging device and X-Ray diffration. A person skilled in the art will appreciate that the experimental results from the sensing means is stored and analzed by the control unit in the similar manner as indicated above.

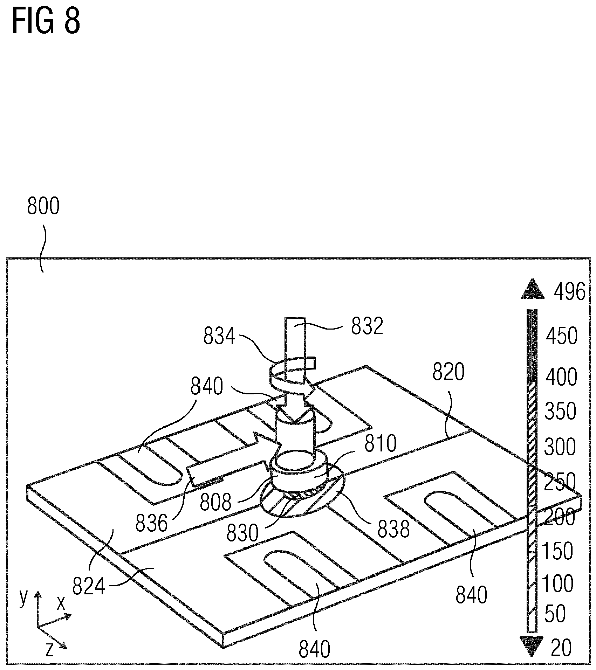

FIGs 8-10 illustrate generation of the FSW model and prediction of the operating parameters based on the FSW model. FIG 8 illustrates a schematic of a FSW model 800 generated for operating parameters associated with temperature gradient and residual stress. The FSW model 800 includes a visual representation of the FSW operation.

As shown in FIG 8, the FSW operation 800 includes a simulated shoulder tool 808, a simulated pin tool 810, simulated work-pieces 824 and simulated joint 820. The operation parameters are also simulated, such as plunge force 832, pin tool rotation 834, slide force 836, clamping force 840. The conditions of the work-piece in terms of temperature gradient and residual stess is also simulated. In FIG 8, the temperature gradient is indicated through low temperature region 838, medium temperature region 830 and high temperature region (not visible in FIG 8).

Th residual stress is evaluated by means of a viscoplastic model. The work-piece behavior is simulated to determine strain rate, temperature, history of strain rate and temperature, and strain hardening and softening.

The viscoplastic model introduces a scalar quantity called the deformation resistance (s), which is used to represent the isotropic resistance to inelastic flow of the material. The equation for inelastic strain rate is given below

The rate-dependent plasticity option proposed by Anand has the following

$$\varepsilon_p = A e^{-\frac{Q}{RT}} [sinh\left(\epsilon \frac{\sigma}{S}\right)]^{1/m}$$

The deformation resistance (s) is proportional to equivalent stress $\sigma$.

The material pararameter of the work-pieces is defined by

$$c = \frac{1}{\epsilon} sinh^{-1} [(\frac{\varepsilon_p}{A} e^{\frac{Q}{RT}})^m]$$

Where $\varepsilon_p$ is the inelastic strain rate, A is the preexponential factor, Q is the activation energy, m is the strain rate sensitivity, $\varepsilon_p$ is the multiplier of stress, R is the gas constant, and T is the absolute temperature, respectively.

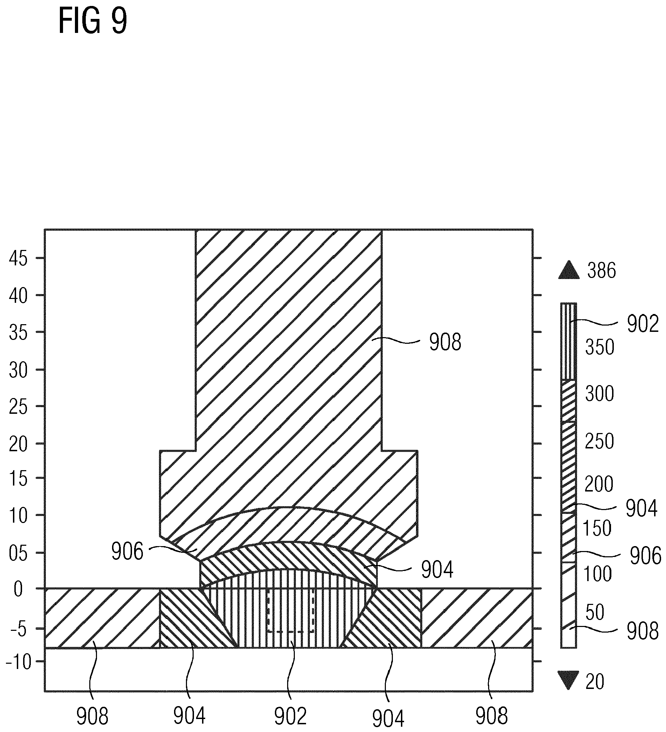

FIG 9 illustrates simulated thermal gradient for the FSW model 800. The simulated thermal gradient indicates different regions in thermal gradient. High temperature region is indicated by 902 and the temperatures reduces from region 902 to 904 and in turn from 904 to 906 and 908.

It should be appreciated by a person skilled in the art that the transition is smooth and will be depicted as an image on a HMI panel in the control unit. For example, in the region 902 the temperature range is from 300-380° Celcius. The temperature range at region 904 is from 200-300° Celcius, the temperature range at region 906 is from 100-150° Celcius and the temperature range at region 908 is from 30-100° Celcius.

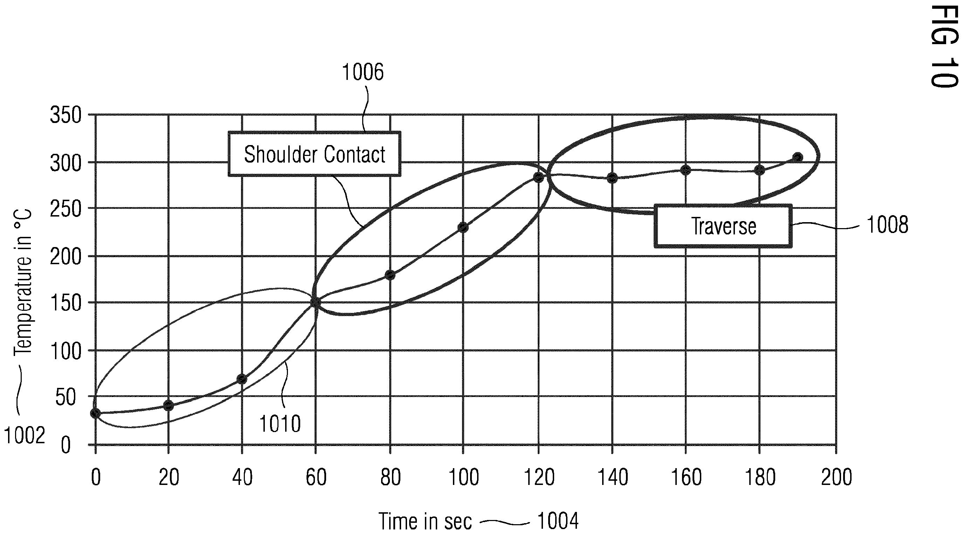

FIG 10 illustrates simulated thermal gradient for stages in the FSW operation. The x-axis indicates time 1004 in seconds and the y-axis indicates temperature 1002 in ° Celcius. At pre-plunge to plunge stage 1010 the temperature increase from 30° Celcius to 150° Celcius. At shoulder contact stage 1006 the temperature increases from 150° Celcius to 290° Celcius. Further, in traverse stage 1008 the temperature remains around 290-310° Celcius.

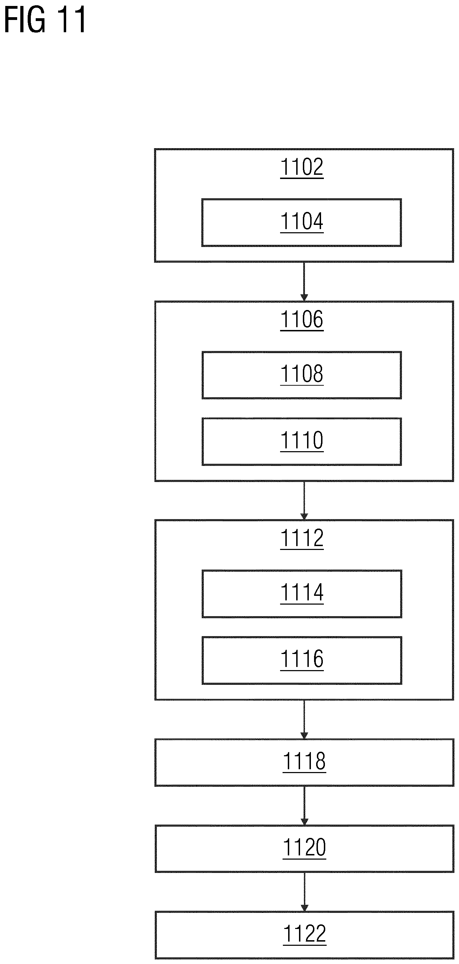

FIG 11 is a flowchart illustrating steps performed to control a FSW operation by a control unit. The method begins at step 1102 with the generation of a FSW model for the FSW operation. The FSW model of the FSW operation based on work-piece parameters, fixture parameters, ambient conditions, FSW apparatus use profile and FSW apparatus parameters associated with the FSW operation. At step 1104, a meta FSW model is generated based on the FSW model to predict the stresses and the thermal gradient in real-time. The meta FSW model is a reduced order model of the FSW model.

At step 1106, FSW operation parameters are predicted based on the FSW model. The predicted FSW operation parameters include include weld profile, stresses, thermal gradient, load generated in work-pieces and the FSW apparatus. At step 1108, the residual stress in workpieces to be welded is predicted based on workpiece-plunge tool combinations, fixture boundary conditions and thermal boundary conditions using a time-dependent plasticity modeling, such as viscoplasticity modeling. At step 1110, thermal gradient in the workpieces and plunge tool is predicted based on the workpiece-plunge tool combinations, fixture boundary conditions and thermal boundary conditions.

At step 1112, the FSW model is validated by comparing the predicted FSW operation parameters and experimental results of at least one non-destructive analysis. The validation is performed for residual stress and thermal gradient at steps 1114 and 1116. Accordingly, at step 1114, the predicted residual stress in the work-pieces is validated based on the experimental results from the at least one non-destructive analysis including X-ray diffraction. At step 1116, the predicted thermal gradient is validated based on experimental results from the at least one non-destructive analysis including thermal imaging and thermocouple data.

At step 1118, one or more parameters to be modified determined from the FSW apparatus parameters, the work-piece parameters, the fixture parameters and the ambient conditions. The one or more parameters is determined based on the validated FSW model.

At step 1120, the FSW model is adjusted based on the experimental results to reflect condition of the FSW operation in real-time. At step 1122, the FSW operation is controlled based on the predicted FSW operation by modifying at least one parameter from one of the FSW apparatus parameters, the work-piece parameters, the fixture parameters and the ambient conditions.

It will be readily apparent that the various methods, algorithms, and modules disclosed herein may be implemented on computer readable media appropriately programmed for computing devices. The modules that implement the methods and algorithms disclosed herein may be stored and transmitted using a variety of media, for example, the computer readable media in a number of manners. In an embodiment, hard-wired circuitry or custom hardware may be used in place of, or in combination with, software instructions for implementation of the processes of various embodiments. Therefore, the embodiments are not limited to any specific combination of hardware and software. In general, the modules comprising computer executable instructions may be implemented in any programming language. The modules may be stored on or in one or more mediums as object code. Various aspects of the method and system disclosed herein may be implemented in a non-programmed environment comprising documents created, for example, in a hypertext markup language (HTML), an extensible markup language (XML), or other format that render aspects of a graphical user interface (GUI) or perform other functions, when viewed in a visual area or a window of a browser program. Various aspects of the method and system disclosed herein may be implemented as programmed elements, or non-programmed elements, or any suitable combination thereof.

Where databases comprising data points are described, it will be understood by one of ordinary skill in the art that (i) alternative database structures to those described may be readily employed, and (ii) other memory structures besides databases may be readily employed. Any illustrations or descriptions of any sample databases disclosed herein are illustrative arrangements for stored representations of information. Any number of other arrangements may be employed besides those suggested by tables illustrated in the drawings or elsewhere. Similarly, any illustrated entries of the databases represent exemplary information only; one of ordinary skill in the art will understand that the number and content of the entries can be different from those disclosed herein. Further, despite any depiction of the databases as tables, other formats including relational databases, object-based models, and/or distributed databases may be used to store and manipulate the data types disclosed herein. Likewise, object methods or behaviors of a database can be used to implement various processes such as those disclosed herein. In addition, the databases may, in a known manner, be stored locally or remotely from a device that accesses data in such a data-base. In embodiments where there are multiple databases in the system, the databases may be integrated to communicate with each other for enabling simultaneous updates of data linked across the databases, when there are any updates to the data in one of the databases.

The present invention can be configured to work in a network environment comprising one or more computers that are in communication with one or more devices via a network. The computers may communicate with the devices directly or indirectly, via a wired medium or a wireless medium such as the Internet, cellular networks such as 4G or 5G and the like, a local area network (LAN), a wide area network (WAN) or the Ethernet, a token ring, or via any appropriate communications mediums or combination of communications mediums. Each of the devices comprises processors, some examples of which are disclosed above, that are adapted to communicate with the computers. In an embodiment, each of the computers is equipped with a network communication device, for example, a network interface card, a modem, or other network connection device suitable for connecting to a network. Each of the computers and the devices executes an operating system, some examples of which are disclosed above. While the operating system may differ depending on the type of computer, the operating system will continue to provide the appropriate communications protocols to establish communication links with the network. Any number and type of machines may be in communication with the computers.

The present invention is not limited to a particular computer system platform, processor, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of systems, and is not limited to any particular distributed architecture, network, or communication protocol.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may affect numerous modifications thereto and changes may be made without departing from the scope and spirit of the invention in its aspects.

**Claims**

1. A method of controlling a Friction Stir Welding (FSW) operation, the method comprising:

   generating a FSW model of the FSW operation based on work-piece parameters, fixture parameters, ambient conditions, FSW apparatus use profile and FSW apparatus parameters associated with the FSW operation;
   predicting FSW operation parameters based on the FSW model, wherein the FSW operation parameters include weld profile, stresses, thermal gradient, load generated in work-pieces and the FSW apparatus; and
   controlling the FSW operation based on the predicted FSW operation by modifying at least one parameter from one of the FSW apparatus parameters, the work-piece parameters, the fixture parameters and the ambient conditions.

2. The method as claimed in claim 1, further comprising:

   validating the FSW model by comparing the predicted FSW operation parameters and experimental results of at least one non-destructive analysis;
   determining the at least one parameter to be modified, from one of the FSW apparatus parameters, the work-piece parameters, the fixture parameters and the ambient conditions, wherein the at least one parameter is determined based on the validated FSW model.

3. The method as claimed in claim 1, further comprising:

   generating a meta FSW model based on the FSW model to predict the stresses and the thermal gradient in real-time, wherein the meta FSW model is a reduced order model of the FSW model;
   determining the at least one parameter to be modified based on the meta FSW model; and
   modifying the at least one parameter from a remote apparatus.

4. The method as claimed in claim 1, further comprising:

adjusting the FSW model based on the experimental results to reflect condition of the FSW operation in real-time.

5. The method as claimed in claim 1, wherein predicting FSW operation parameters based on the FSW model:

predicting a residual stress in workpieces to be welded based on a plurality of workpiece-plunge tool combinations, fixture boundary conditions and thermal boundary conditions using a time-dependent plasticity modeling; and
predicting a thermal gradient in the workpieces and plunge tool based on the plurality of workpiece-plunge tool combinations, fixture boundary conditions and thermal boundary conditions.

6. The method as claimed in claims 2 and 5, wherein validating the FSW model by comparing the predicted FSW operation parameters and experimental results of at least one non-destructive analysis, comprises:

validating the predicted residual stress in the work-pieces based on the experimental results from the at least one non-destructive analysis including X-ray diffraction; and
validating the predicted thermal gradient based on the experimental results from the at least one non-destructive analysis including thermal imaging and thermocouple data.

7. A control unit for controlling a Friction Stir Welding (FSW) operation, the control unit comprising:

a receiver to receive sensor data from a plurality of sensors associated with the FSW operation;
at least one processor; and
a memory communicatively coupled to the at least one processor, the memory comprising:

model generation module to generate a FSW model of the FSW operation based on work-piece parameters, fixture parameters, ambient conditions, FSW apparatus use profile and FSW apparatus parameters associated with the FSW operation;
prediction module to predict FSW operation parameters based on the FSW model, wherein the FSW operation parameters include weld profile, stresses, thermal gradient, load generated in work-pieces and the FSW apparatus; and

wherein the control unit is capable of controlling the FSW operation based on the predicted FSW operation parameters by modifying at least one parameter from one of the FSW apparatus parameters, the work-piece parameters, the fixture parameters and the ambient conditions.

8. The control unit as claimed in claim 7, further comprising a validation module to validate the FSW model by comparing the predicted FSW operation parameters and experimental results of at least one non-destructive analysis, wherein the validation module is configured to determine the at least one parameter to be modified, from one of the FSW apparatus parameters, the work-piece parameters, the fixture parameters and the ambient conditions, wherein the at least one parameter is determined based on the validated FSW model.

9. The control unit as claimed in claim 7, wherein the model generation module further comprises:

a meta FSW model generator based on the FSW model to predict the stresses and the thermal gradient in real-time, wherein the meta FSW model is a reduced order model of the FSW model,
wherein the validation module to determine the at least one parameter to be modified based on the meta FSW model, and wherein the control unit is configured to modify the at least one parameter based on an input from a remote apparatus.

10. The control unit as claimed in claim 7, wherein the validation unit is configured to adjust the FSW model based on the experimental results to reflect condition of the FSW operation in real-time.

11. The control unit as claimed in claim 7, wherein the pre-diciton module further comprises:

stress prediction module to predict a residual stress in workpieces to be welded based on a plurality of workpiece-plunge tool combinations, fixture boundary conditions and thermal boundary conditions using a time-dependent plasticity modeling; and
thermal prediction module to predict a thermal gradient in the workpieces and plunge tool based on a plurality of workpiece-plunge tool combinations, fixture boundary conditions and thermal boundary conditions.

12. The control unit as claimed in claim 7, wherein the validating module further comprises:

stress validation module to validate the predicted residual stress in the workpieces based on the experimental results from the at least one non-destructive analysis including X-ray diffraction; and

thermal validation module to validate the predicted thermal gradient based on the experimental results from the at least one non-destructive analysis including thermal imaging and thermocouple data.

13. The control unit as claimed in claim 7 is a graphical user interface communicatively coupled to the FSW apparatus and sensors in the FSW apparatus.

14. A system for controlling a plurality of Friction Stir Welding (FSW) operations, comprising:

a server operable on a cloud computing platform;
a network interface communicatively coupled to the server;
a plurality of sensors associated with a plurality of FSW apparatus; and
control units communicatively coupled to the plurality of sensors and the server via the network interface, wherein each of the control units associated with one of the plurality FSW operations, wherein each of the control units control the FSW operation according to claims 1-13.

15. The system according to the claim 14, wherein the server comprises:

a communication unit capable of communicating with the control units;
a processesing unit communicatively coupled to the communication unit; and
a memory unit communicatively coupled to the processing unit and the communication unit, the memory unit comprising:

model training module to train FSW models of FSW apparatuses performing the plurality of FSW operations; and
model tuning module to tune a second FSW model associated with a second FSW apparatus based on a first FSW model associated with a first FSW apparatus.

FIG 1

# FIG 2

# FIG 3

FIG 4

EP 3 581 318 A1

# FIG 5

500

510

502

512

514

504

516

518

522

524

520

506

508

526

550

580

E

582

584

586

588

500A

D

D

# FIG 6

680A  500  682  684  686  688

600

680D

500

E

D

D

680B

650

680C

640

602  604

610

612  614

FIG 7

FIG 8

# FIG 9

# FIG 10

## FIG 11

```
┌─────────────────────────────┐
│            1102             │
│   ┌─────────────────────┐   │
│   │         1104         │   │
│   └─────────────────────┘   │
└─────────────────────────────┘
              │
              ▼
┌─────────────────────────────┐
│            1106             │
│   ┌─────────────────────┐   │
│   │         1108         │   │
│   └─────────────────────┘   │
│   ┌─────────────────────┐   │
│   │         1110         │   │
│   └─────────────────────┘   │
└─────────────────────────────┘
              │
              ▼
┌─────────────────────────────┐
│            1112             │
│   ┌─────────────────────┐   │
│   │         1114         │   │
│   └─────────────────────┘   │
│   ┌─────────────────────┐   │
│   │         1116         │   │
│   └─────────────────────┘   │
└─────────────────────────────┘
              │
              ▼
┌─────────────────────────────┐
│            1118             │
└─────────────────────────────┘
              │
              ▼
┌─────────────────────────────┐
│            1120             │
└─────────────────────────────┘
              │
              ▼
┌─────────────────────────────┐
│            1122             │
└─────────────────────────────┘
```

Europäisches
Patentamt

European
Patent Office

Office européen
des brevets

## EUROPEAN SEARCH REPORT

Application Number

EP 18 17 7706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mohammad Hasan Shojaeefard, Mostafa Akbari, Parviz Asadi: "Multi objective optimization of friction stir welding parameters using FEM and neural network", International Journal of Precision Engineering and Manufacturing, vol. 15, no. 11 28 November 2014 (2014-11-28), pages 2351-2356, XP002787071, ISSN: 2234-7593 Retrieved from the Internet: URL:https://doi.org/10.1007/s12541-014-0600-x [retrieved on 2013-10-25] | 1,2,5-8, 11-15 | INV. B23K20/12 G06F17/50 |
| A | * the whole document * | 3,4,9,10 | |
| X | WO 2010/050834 A1 (INST DE SOLDADURA E QUALIDADE [PT]; LOURO RUI ALEXANDRE NARCISO MI [PT] 6 May 2010 (2010-05-06) | 1,2,5-8, 11-15 | |
| A | * page 16 - page 21 * | 3,4,9,10 | |
| X | X.KZhu, Y.JChao: "Numerical simulation of transient temperature and residual stresses in friction stir welding of 304L stainless steel", Journal of Materials Processing Technology, vol. 146, no. 2 24 January 2004 (2004-01-24), pages 263-272, XP002787072, Retrieved from the Internet: URL:https://doi.org/10.1016/j.jmatprotec.2003.10.025 [retrieved on 2002-02-21] * the whole document * | 1,2,5-8, 11-15 | TECHNICAL FIELDS SEARCHED (IPC) B23K G06F |

-/--

The present search report has been drawn up for all claims

| Place of search | Date of completion of the search | Examiner |
|---|---|---|
| Munich | 4 December 2018 | Perret, William |

EPO FORM 1503 03.82 (P04C01)

page 1 of 2

Europäisches
Patentamt

European
Patent Office

Office européen
des brevets

**EUROPEAN SEARCH REPORT**

Application Number

EP 18 17 7706

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | A. Pittner, D. Weiß, C. Schwenk, M. Rethmeier: "Methodology to improve applicability of welding simulation", Science and Technology of Welding and Joining, vol. 13, no. 6 4 December 2013 (2013-12-04), pages 496-508, XP002787073, Retrieved from the Internet: URL:https://doi.org/10.1179/136217108X329322 * page 1 - page 5 * * page 9 - page 11 * ----- | 3,4,9,10 | |
| A | Raphael Thater, Philipp Wiethop, Michael Rethmeier: "Welding Simulation in Car Body Construction", Laser Technik Journal, vol. 12, no. 2 1 April 2015 (2015-04-01), pages 33-37, XP002787074, Retrieved from the Internet: URL:https://doi.org/10.1002/latj.201500009 * page 2 - page 4 * ----- | 1-15 | |
| X A | FR 2 881 067 A1 (EADS SOC PAR ACTIONS SIMPLIFIE [FR]) 28 July 2006 (2006-07-28) * abstract * * page 3, line 13 - page 5, line 6 * * page 12, line 16 - page 15, line 11 * * claim * * ----- | 1,2,5-8, 11-15 3,4,9,10 | TECHNICAL FIELDS SEARCHED (IPC) |

The present search report has been drawn up for all claims

| Place of search | Date of completion of the search | Examiner |
|---|---|---|
| Munich | 4 December 2018 | Perret, William |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 17 7706

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2018

| Patent document cited in search report | Publication date | Patent family member(s) | Publication date |
|---|---|---|---|
| WO 2010050834 A1 | 06-05-2010 | EP 2342040 A1<br>WO 2010050834 A1 | 13-07-2011<br>06-05-2010 |
| FR 2881067 A1 | 28-07-2006 | FR 2881067 A1<br>WO 2006077356 A1 | 28-07-2006<br>27-07-2006 |

EPO FORM P0459

For more details about this annex : see Official Journal of the European Patent Office, No. 12/82

**EP 3 581 318 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9387551 B2
- WO 2017022537 A1